# EUROPÄISCHE PATENTSCHRIFT

(11) **EP 2 771 570 B1**
(45) Veröffentlichungstag und Bekanntmachung des Hinweises auf die Patenterteilung: **05.12.2018**
(21) Anmeldenummer: 12784503.0
(22) Anmeldetag: 17.10.2012
(51) Int. Cl.: F03D 80/40, F03D 3/00, F03D 17/00, F03D 7/04, F03D 7/02

(54) **VERFAHREN ZUM STEUERN EINER WINDENERGIEANLAGE**
METHOD FOR CONTROLLING A WIND TURBINE
PROCÉDÉ DE COMMANDE D'UNE ÉOLIENNE

(30) Priorität: 24.10.2011 DE 102011085107
(43) Veröffentlichungstag der Anmeldung: 03.09.2014
(73) Patentinhaber: Wobben Properties GmbH, 26607 Aurich (DE)
(72) Erfinder: GIERTZ, Helge, 26789 Leer (DE); DE BOER, Wolfgang, 26802 Moormerland (DE)
(74) Vertreter: Eisenführ Speiser
(86) Internationale Anmeldenummer: PCT/EP2012/070601
(87) Internationale Veröffentlichungsnummer: WO 2013/060613

(56) Entgegenhaltungen:
- EP-A2- 1 906 192
- EP-A2- 2 267 305
- US-A1- 2011 098 975

## Beschreibung

Die vorliegende Erfindung betrifft ein Verfahren zum Steuern einer Windenergieanlage sowie ein Verfahren zum Steuern mehrerer Windenergieanlagen. Weiterhin betrifft die Erfindung eine Windenergieanlage und einen Windpark mit mehreren Windenergieanlagen.

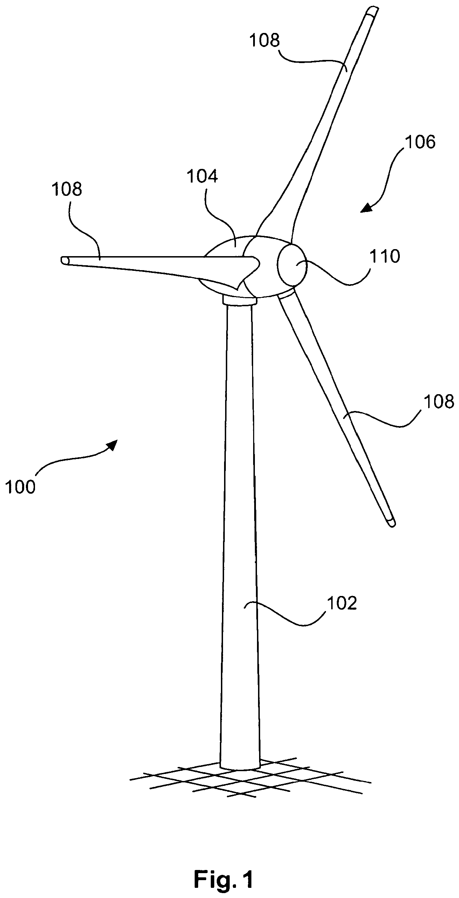

Windenergieanlagen sind allgemein bekannt, sie wandeln in heutzutage üblicher Bauform kinetische Energie des Windes in eine Bewegungsenergie eines aerodynamischen Rotors. Die Bewegungsenergie wird mittels eines Generators in elektrische Energie gewandelt bzw. in elektrische Leistung, wenn eine Momentaufnahme betrachtet wird. Eine allgemein übliche Windenergieanlage ist in der Fig. 1 dargestellt.

Beim Steuern einer Windenergieanlage ist auch darauf zu achten, dass etwaigen Störungen in der Windenergieanlage begegnet wird, um Folgeschäden an der Windenergieanlage und/oder eine Gefährdung, insbesondere eine Personengefährdung, auszuschließen oder zu verringern. Hierzu werden etwaige Störungen in der Windenergieanlage überwacht, um gegebenenfalls Schutzmaßnahmen einzuleiten.

Beispielsweise kann ein Brand in der Gondel der Windenergieanlage durch einen Rauchsensor erfasst werden. Die Windenergieanlage kann dann angehalten werden und gegebenenfalls können Löschvorgänge eingeleitet werden. Wird ein optischer Rauchmelder eingesetzt, so kann dieser zu einem Fehlalarm führen, wenn die Sichtverhältnisse aus anderen Gründen als durch Rauch schlecht sind, wie zum Beispiel durch Staub oder Eiskristalle.

Ein weiteres Beispiel bildet eine Geräuschüberwachung der Windenergieanlage, die beispielsweise am Spinner, also im Bereich der Abdeckung der Rotornabe, vorgesehen sein kann. Durch eine solche Geräuschüberwachung können ungewöhnlich laute Geräusche erfasst werden, was auf einen vorhandenen oder drohenden Schaden, insbesondere mechanische Fehlfunktion hindeuten kann. In diesem Fall wird die Windenergieanlage - die nachfolgend auch synonym einfach als Anlage bezeichnet wird - angehalten und Servicepersonal verständigt. Auch hier kann es zu einem Fehlalarm kommen, wenn beispielsweise ein schwerer Hagelschauer auf die Windenergieanlage, einschließlich den Spinner, niedergeht und dadurch zu einem ungewöhnlich hohen Geräuschpegel führt.

Dies sind nur zwei Beispiele für Überwachungen in der Windenergieanlage, die zu einem Fehlalarm führen können. Kommt es zu einem solchen Fehlalarm, kann eine Ertragseinbuße durch unerwünschtes Anhalten der Windenergieanlage die Folge sein. Andererseits kann ein viel größerer Schaden an einer Windenergieanlage oder durch eine Windenergieanlage entstehen, wenn die genannten oder andere Warnsignale nicht beachtet werden während kein Fehlalarm vorliegt.

Die europäische Offenlegungsschrift EP 2 267 305 A2 betrifft ein Verfahren und ein System zum Steuern des Betriebs einer Windenergieanlage. Das Verfahren beinhaltet das Erfassen wenigstens eines Fehlermodus, der sich auf einen oder mehrere Komponenten der Windenergieanlage bezieht. Die europäische Offenlegungsschrift EP 1 906 192 A2 betrifft ein Verfahren und eine Vorrichtung zum Auswerten von Sensoren bzw. zum Steuern des Betriebs einer Vorrichtung, das einen Sensor beinhaltet. Das Verfahren beinhaltet das Aufnehmen von Messsignalen von einem ersten Sensor, der dazu vorbereitet ist, einen Parameter zu messen.

Der Erfindung liegt somit die Aufgabe zugrunde, wenigstens eines der oben genannten Probleme zu adressieren, insbesondere zu verringern. Insbesondere soll eine Lösung geschaffen werden, Fehlersignale sicherer zu erkennen und Fehlalarme zu vermeiden, ohne zutreffend generierte Fehlersignale zu ignorieren oder zu übersehen. Zumindest soll eine alternative Ausführung geschaffen werden.

Erfindungsgemäß wird ein Verfahren zum Steuern einer Windenergieanlage gemäß Anspruch 1 vorgeschlagen. Demnach wird ein intern in der betreffenden zu steuernden Windenergieanlage erzeugtes Fehlersignal erfasst. Dieses Fehlersignal zeigt eine Störung der Windenergieanlage an, wie beispielsweise der Verdacht eines Feuers in der Windenergieanlage oder der Verdacht eines Schadens an einem mechanischen Element. Nachfolgend werden insbesondere diese beiden Fälle, nämlich einen Brandfall betreffende Fehlermeldungen bzw. Fehlersignale einerseits und einen durch ein lautes Geräusch angezeigten Schaden betreffende Fehlersignale bzw. Fehlermeldungen zur Erläuterung herangezogen. Dennoch ist die Erfindung nicht auf diese beiden grundsätzlichen Anwendungsfälle beschränkt.

Darunter, dass das Fehlersignal, das grundsätzlich auch als Fehlermeldung bezeichnet werden kann, eine Störung der Windenergieanlage anzeigt, ist zu verstehen, dass ein entsprechendes Fehlerkriterium vorliegt, wie beispielsweise das Ansprechen eines Rauchmelders oder das Ansprechen eines Geräuschsensors. Dass das Fehlersignal die betreffende Störung anzeigt, schließt auch die Möglichkeit ein, dass tatsächlich die Störung aber nicht vorliegt. Das Fehlersignal kann das Ergebnis eines Sensors oder auch mehrerer Sensoren sein, oder es können andere Zustände, wie beispielsweise Betriebszustände, ausgewertet werden. Ebenso können mehrere Fehlersignale für unterschiedliche Störungen gleichzeitig vorliegen.

Weiterhin wird ein externes Fehlersignal an der Windenergieanlage empfangen. Ein externes Fehlersignal ist ein solches, das eine Störung einer anderen Windenergieanlage anzeigt. Insbesondere ist ein solches externes Fehlersignal, das sich auf die Störung einer externen, also einer anderen, Windenergieanlage bezieht, bei dieser anderen Windenergieanlage ein internes Fehlersignal, das aber auch an diese erste Windenergieanlage übertragen wird. Durch diese Übertragung wird es für die erste Windenergieanlage zu einem externen Fehlersignal.

Es wird nun von der ersten Windenergieanlage das interne Fehlersignal in Abhängigkeit des wenigstens einen externen Fehlersignals ausgewertet. Die Auswertung des internen Fehlersignals beschränkt sich somit nicht auf dieses interne Fehlersignal, sondern berücksichtigt außerdem wenigstens ein externes Fehlersignal, insbesondere nämlich ein solches, das jeweils die gleiche Störung bzw. Störungsart betrifft wie das interne Fehlersignal, um erst daraus abzuleiten, ob eine Störung vorliegt oder nicht.

Vorzugsweise wird eine Schutzmaßnahme zum Schützen der Windenergieanlage, insbesondere des Anhalten der Windenergieanlage, abhängig von dem internen Fehlersignal und außerdem abhängig von dem wenigstens einen externen Fehlersignal eingeleitet. Das Einleiten einer Schutzmaßnahme beschränkt sich somit nicht auf die Auswertung des internen Fehlersignals. Damit kann das eine oder die mehreren berücksichtigten externen Fehlersignale dann gegebenenfalls darüber entscheiden, ob von einer Störung ausgegangen wird oder nicht. Neben dem Anhalten der Windenergieanlage kommen noch andere Schutzmaßnahmen in Betracht, wie beispielsweise das Auslösen eines Löschvorgangs, falls das Fehlersignal einen Brandfall betrifft, um nur ein weiteres Beispiel zu nennen.

Erfindungsgemäß wird vorgeschlagen, dass beim Auswerten des internen Fehlersignals von dem Nichtvorliegen einer Störung ausgegangen wird, wenn das interne Fehlersignal eine Störung anzeigt und wenigstens ein weiteres externes Fehlersignal ebenfalls eine gleichartige Störung anzeigt, nämlich eine Störung jeweils der Windenergieanlage, bei der besagtes externes Fehlersignal ein internes Fehlersignal ist. Tritt beispielsweise bei der ersten Windenergieanlage ein internes Fehlersignal auf, das einen Brand anzeigt, insbesondere ausgelöst durch einen Rauchmelder in der ersten Windenergieanlage, so ist zunächst von einem Brandfall auszugehen. Liegt nun ein externes Fehlersignal einer anderen, z. B. zweiten, Windenergieanlage vor, das ebenfalls auf einen Brand hindeutet, nämlich auf einen Brand in der zweiten Windenergieanlage, so kann dies ein Hinweis auf einen Fehlalarm sein. Erfindungsgemäß wurde nämlich erkannt, dass es äußerst unwahrscheinlich ist, dass in zwei Windenergieanlagen zugleich ein Brand auftritt. Es kann in einem solchen Fall vielmehr davon ausgegangen werden, dass die Rauchmelder, die jeweils das Brandwarnsignal als Fehlersignal ausgegeben haben, durch andere Gegebenheiten als einen Brand ausgelöst haben, nämlich durch Gegebenheiten, die erfahrungsgemäß und/oder sinnvollerweise für mehrere Windenergieanlagen zugleich zu erwarten sind. Dies ist beispielsweise bei einem Sandsturm der Fall. Liegt ein Sandsturm vor, können sich die Sichtverhältnisse kausalerweise an mehreren, in unmittelbarer Nähe zueinander aufgestellten Windenergieanlagen zugleich verschlechtern.

Ein solches Phänomen kann auch für andere Störungen auftreten, wie beispielsweise bei einer Geräuschüberwachung. Meldet in der ersten Windenergieanlage ein internes Fehlersignal einen zu hohen Geräuschpegel, so kann dies auf ein mechanisches Problem wie beispielsweise einen Lagerschaden hindeuten. Die Geräuschsensoren sind nämlich in erster Linie bzw. üblicher Weise auf das Detektieren loser Teile und damit auf sporadisch auftretende Geräusche ausgelegt. Meldet aber fast zeitgleich ein externes Fehlersignal, beispielsweise einer zweiten Windenergieanlage, ebenfalls einen zu hohen Geräuschpegel, so ist es unwahrscheinlich, dass beide Windenergieanlagen zugleich einen mechanischen, ein lautes Geräusch erzeugenden Schaden aufweisen. So ist es insbesondere unwahrscheinlich, dass sich in beiden Windenergieanlagen zugleich ein Teil löst. Stattdessen kann das zeitgleiche Auftreten eines lauten Geräusches an mehreren, in der Nähe zueinander angeordneten Windenergieanlagen vielmehr auf beispielsweise einen Hagelfall hindeuten. Ein Hagelfall tritt üblicherweise nicht isoliert an einer einzelnen Windenergieanlage auf, sondern beispielsweise fast zeitgleich in einem gesamten Windpark.

Somit kommt es zu der zunächst überraschenden Erkenntnis, dass das Vorliegen mehrerer gleichartiger Fehlersignale bzw. Fehlersignale für mehrere gleichartige Störungen, vielmehr darauf hinweist, dass eine solche Störung gerade dann nicht vorliegt. Diese Erkenntnis wird durch die beschriebenen Verfahren berücksichtigt und entsprechend umgesetzt.

Gemäß einer Ausgestaltung wird somit ein Verfahren vorgeschlagen, das dadurch gekennzeichnet ist, dass dann, wenn das interne Fehlersignal eine Störung der ersten Windenergieanlage anzeigt, eine Schutzmaßnahme, insbesondere das Anhalten der Windenergieanlage, eingeleitet wird, wenn das empfangene externe Fehlersignal bzw. zunächst eines oder mehrere der empfangenen externen Fehlersignale, nicht auf eine gleichartige Störung der betreffenden anderen Windenergieanlage hinweist. Wenn das empfangene externe Fehlersignal bzw. eines der empfangenen externen Fehlersignale aber eine gleichartige Störung der betreffenden anderen Windenergieanlage anzeigt, wird eine Warnung, insbesondere ein Warnsignal, erzeugt, ohne dass eine Schutzmaßnahme eingeleitet wird. Wie erläutert, kann die zusätzliche Auswertung wenigstens eines externen Fehlersignals darauf hindeutet, dass trotz Vorliegen eines internen Fehlersignals die damit angezeigte Störung unwahrscheinlich ist. Die besagte Störung ist dabei gleichwohl nicht ausgeschlossen, und durch das Vorsehen eines Warnsignals in diesem Falle besteht die Möglichkeit, die jeweils zugrundeliegende Situation weiter im Detail zu analysieren.

Eine Analyse einer solchen Situation - die gegebenenfalls auch ohne Vorliegen eines genannten Warnsignals durchgeführt werden kann - kann beispielsweise automatisiert durch die Windenergieanlage oder ihre Steuerung oder eine zentrale Steuerung erfolgen. Dabei werden beispielsweise weitere Sensordaten, wie beispielsweise die Temperatur eines Temperatursensors, ausgewertet. Zusätzlich oder alternativ kann eine Analyse manuell erfolgen. Insbesondere kann aufgrund bekannter Wetter- oder Umweltbedingungen oder auch aus anderen Erfahrungswerten heraus ein Grund für das interne Fehlersignal gefunden werden, um sicherzugehen, dass die angezeigte Störung nicht vorliegt. Ebenso kann bei der Analyse herauskommen, dass die angezeigte Störung wider Erwarten doch vorliegt.

Vorzugsweise wird ein solches Warnsignal an eine Leitzentrale übersandt oder von dieser erzeugt. Vorzugsweise kann das Warnsignal hierbei Informationen über die Fehlersignale, nämlich das interne bzw. mehrere interne Fehlersignale oder das eine oder mehrere externe Fehlersignale umfassen. Diese Information kann entsprechend dafür eingesetzt werden, die tatsächliche Ursache für die jeweiligen Fehlersignale herauszufinden.

Vorzugsweise wird ein sogenanntes SCADA verwendet, dessen Bezeichnung aus dem Englischen stammt und "Supervisory Control And Data Acquisition" abkürzt, und gleichwohl im deutschen Sprachgebrauch geläufig ist. Bei Windenergieanlagen wird ein solches Datensystem verwendet, um Mess- und Steuerdaten zwischen einzelnen Windenergieanlagen und auch hin zu einem Leitsystem zu übertragen. Auf diesem SCADA-System können die entsprechenden Fehlersignale bereitgestellt werden. Demnach stellt jede Windenergieanlage, die entsprechend an diesem System teilnimmt, ihre internen Fehlersignale als externe Fehlersignale auf dem SCADA zur Verfügung. Vorzugsweise umfasst hierbei das jeweilige Fehlersignal nicht nur seine Art sondern auch seine Herkunft, nämlich insbesondere von welcher Windenergieanlage es stammt. Hierdurch stehen die Fehlersignale, insbesondere auch benachbarter Windenergieanlagen, insbesondere eines Windparks, zur Verfügung und jede beteiligte Windenergieanlage kann auf eigene Art und Weise die bereitgestellten Informationen, insbesondere die bereitgestellten Fehlersignale, in eine eigene Fehlersignalauswertung im Grunde nach Belieben einbeziehen.

Gemäß einer weiteren Ausführungsform wird vorgeschlagen, dass das interne Fehlersignal und/oder ein betreffendes Sensorsignal, für eine vorbestimmte Zeit unterdrückt wird, wenn das interne Fehlersignal eine Störung anzeigt und wenigstens ein externes Fehlersignal jeweils eine gleichartige Störung der betreffenden anderen Windenergieanlage bzw. einer der betreffenden anderen Windenergieanlagen anzeigt.

Günstig ist es, ein übergreifendes Verfahren vorzusehen, das zum Steuern mehrerer Windenergieanlagen verwendet wird. Wenigstens eine der Windenergieanlagen wird mit einem Verfahren zumindest einer der genannten Ausführungsformen betrieben. Vorzugsweise werden alle dieser Gesamtsteuerung zugrundeliegenden Windenergieanlagen jeweils mit einem Verfahren gemäß einer der beschriebenen Ausführungsformen gesteuert. Vorzugsweise tauschen die Windenergieanlagen ihre Fehlersignale untereinander aus, um die oben beschriebenen Abschätzungen vornehmen zu können. Das kann direkt oder über eine Leitzentrale wie ein SCADA erfolgen. Insbesondere stellt wenigstens eine der Windenergieanlagen wenigstens ein internes Fehlersignal den übrigen Windenergieanlagen als externes Fehlersignal zur Verfügung. Entsprechend ergibt sich ein vorteilhaftes Gesamtkonzept zum Steuern dieser Windenergieanlagen.

Erfindungsgemäß wird zudem eine Windenergieanlage vorgeschlagen, die einen aerodynamischen Rotor zum Erzeugen einer Drehbewegung aus Wind aufweist und zudem einen elektrischen Generator aufweist zum Erzeugen elektrischer Leistung aus der Drehbewegung. Die Windenergieanlage verwendet zum Steuern ein Verfahren einer der erläuterten Ausführungsformen. Ein solches Verfahren kann in der Windenergieanlage beispielsweise auf einer Steuerungsvorrichtung und/oder einen Prozessrechner implementiert sein. Entsprechend ist die Windenergieanlage dazu vorbereitet, eine Störung diffiziler auszuwerten, indem nicht nur ein internes Fehlersignal berücksichtigt wird, sondern weitere externe Fehlersignale oder zumindest eines davon, die von anderen Windenergieanlagen erzeugt und bereitgestellt werden.

Vorzugsweise wird ein Windpark vorgeschlagen, der mehrere Windenergieanlagen aufweist, wenigstens eine Windenergieanlage ist dabei wie oben beschrieben ausgebildet und wird insbesondere nach einem Verfahren der beschriebenen Ausführungsformen betrieben. Der Windpark ist dazu vorbereitet, ein gesamtes, übergreifendes Verfahren einzusetzen, demnach alle oder zumindest ein Teil der Windenergieanlagen des Parks von den zusätzlichen Informationen der anderen Windenergieanlagen im Park profitieren. Vorzugsweise sind die Windenergieanlagen über ein SCADA-System untereinander zum Austausch von Daten gekoppelt. Günstig ist es, wenn eine zentrale Leitstelle vorgesehen ist, die zentrale Daten verwaltet und/oder weiterleitet. Ein Windpark zeichnet sich insbesondere dadurch aus, dass er zum Einspeisen elektrischer Leistung in ein elektrisches Netz einen allen Windenergieanlagen gemeinsamen Einspeiseknotenpunkt verwendet.

Mit den beschriebenen Lösungen kann gegebenenfalls das Einleiten einer Schutzmaßnahme bei Auftreten eines internen Fehlersignals verhindert werden, wenn wenigstens ein anderes Fehlersignal eines anderen Windparks vorliegt, das eine gleiche Störung anzeigt. Dabei kann es sein, dass diejenige Windenergieanlage, bei der dieses Fehlersignal zuerst auftritt, von der dadurch angezeigten Störung ausgeht und eine entsprechende Schutzmaßnahme einleitet. Möglicherweise wird also diese Windenergieanlage unnötigerweise angehalten. Erst wenn - gegebenenfalls kurze Zeit später - weitere Fehlersignale von anderen Windenergieanlagen dazu auftreten, wird die Vermutung nahegelegt, dass die angezeigte Störung doch nicht vorliegt. Es kann nun situationsabhängig entschieden werden, ob die bereits angehaltene Windenergieanlage - um bei diesem Beispiel zu bleiben - wieder anläuft oder sicherheitshalber bis zur Klärung des Fehlersignals angehalten bleibt.

Im Grunde wird vorgeschlagen, basierend auf statistischen Überlegungen die Aussage eines Fehlersignals über eine angezeigte Störung infrage zu stellen. Vorzugsweise wird vorgeschlagen, nicht nur ein einziges externes Fehlersignal zu Rate zu ziehen, sondern wenigstens ein zweites Fehlersignal zu berücksichtigen und ein Vorliegen der durch das interne Fehlersignal angezeigten Störung erst dann auszuschließen, wenn wenigstens zwei externe Fehlersignale dieselbe Störung anzeigen. Vorzugsweise wird das Vorliegen einer angezeigten Störung erst ausgeschlossen, wenn drei externe Fehlersignale oder weiter bevorzugt wenigstens vier externe Fehlersignale eine gleichartige Störung in den jeweils anderen Windenergieanlagen anzeigen.

Gemäß einer erfindungsgemäßen alternativen Ausführungsform werden Fehlersignale berücksichtigt, die zwischen mehreren Windenergieanlagen in einem kausalen Zusammenhang stehen. Hierzu gehören insbesondere Fehlersignale zu Situationen, die sich aus der örtlichen Nähe mehrerer Windenergieanlagen ergeben. Hierzu gehört insbesondere eine Eisansatzerkennung. Bei mehreren Windenergieanlagen in einem Windpark liegen üblicherweise sehr ähnliche Witterungsbedingungen zugrunde. Wenn mehrere Windenergieanlagen in einem Windpark einen Eisansatz erkennen, ist die Wahrscheinlichkeit hoch, dass im Windpark insgesamt ein Eisansatz vorliegt. Eine solche Schlussfolgerung kann auch davon abhängen, wie viel und welche Windenergieanlagen im Windpark einen Eisansatz erkannt haben und letztlich kann es auch davon abhängen, wie präzise die Eisansatzerkennung der jeweiligen Windenergieanlage ist. Wenn beispielsweise zehn von elf Windenergieanlagen eines Windparks einen Eisansatz erkannt haben, ist die Wahrscheinlichkeit hoch, dass die elfte Windenergieanlage auch einen Eisansatz aufweist. Das gilt allerdings dann nicht, wenn diese elfte Windenergieanlage entweder eine so zuverlässige Eisansatzerkennung aufweist, dass man sich darauf 100%ig verlassen kann, oder andere Gründe konkret bei dieser Anlage gegen einen Eisansatz sprechen, wie beispielsweise eine geschütztere Lage, oder eine bereits in Betrieb genommene Beheizung der Rotorblätter zum Verhindern eines Eisansatzes.

Vorzugsweise wird vorgeschlagen zu solchen Fehlern, die über mehrere Windenergieanlagen in einem kausalen Zusammenhang stehen, die zugehörigen Fehlersignale mehrerer Windenergieanlagen auszuwerten, insbesondere mehrere Windenergieanlagen eines Windparks auszuwerten. Eine solche Auswertung umfasst vorzugsweise die Auswertung, wie viele der untersuchten Windenergieanlagen, insbesondere wie viele der Windenergieanlagen des Windparks dieses Fehlersignal aktuell ausgeben. Ergänzend wird vorgeschlagen, weitere Details zu den Windenergieanlagen auszuwerten, die ein solches Fehlersignal ausgegeben haben, insbesondere deren Aufstellungsort im Windpark. Eine solche Auswertung kann an einer Windenergieanlage, an allen Windenergieanlagen ganz oder teilweise vorgenommen werden oder an einem zentralen Prozessrechner durchgeführt werden. Das Ergebnis wird vorzugsweise als Parkstörungssignal ausgegeben und kann insoweit beispielsweise die Anzahl der Windenergieanlagen angeben, die ein solches Fehlersignal aufweisen, insbesondere in Relation zu allen Windenergieanlagen des Windparks. Diese Angabe kann als absoluter Wert erfolgen oder prozentual bezogen auf alle vorhandenen Windenergieanlagen des Windparks angegeben werden. Vorzugsweise wird das Parkstörungssignal als Wahrscheinlichkeit oder als Häufigkeit für den besagten Fehlerfall im Windpark ausgegeben, oder es wird zur Berechnung einer solchen Wahrscheinlichkeit oder Häufigkeit verwendet.

Insoweit wird vorgeschlagen, für gleiche Fehler verschiedener Windenergieanlagen zwischen solchen zu unterscheiden, die zwischen diesen Windenergieanlagen kausal zusammenhängen, und solchen, die nicht kausal zusammenhängen. Beim Auftreten gleicher Fehlersignale verschiedener Windenergieanlagen für Fehler, die nicht kausal zusammenhängen, wird davon ausgegangen, dass entsprechende Fehlersignale fälschlicherweise ausgegeben wurden bzw. dass wahrscheinlich ist, dass sie fälschlicherweise ausgegeben wurden. Entsprechend lässt sich gegebenenfalls begründen, das Fehlersignal zu ignorieren.

Für mehrere Fehlersignale unterschiedlicher Windenergieanlagen, die einen gleichen, kausal zusammenhängenden Fehler angeben, wird davon ausgegangen, dass sich hieraus zumindest eine Wahrscheinlichkeit ableiten lässt, dass der Fehler in noch weiteren Windenergieanlagen, gegebenenfalls in allen Windenergieanlagen eines Windparks, vorliegt.

Ein solcher kausaler Fehler betrifft insbesondere einen Eisansatz und entsprechend eine Eisansatzerkennung bzw. Eiserkennung. Vorzugsweise wird somit vorgeschlagen, dass wenn bereits eine oder mehrere Anlagen in einem Windpark mit einem entsprechenden Eiserkennungsstatus angehalten wurden, mithilfe einer entsprechenden Funktion, die als Park-Eiserkennung bezeichnet werden kann, erreicht werden können, dass alle anderen Anlagen des Parks oder ausgewählte Anlagen des Parks gestoppt werden, auch wenn sie selber noch keinen Eisansatz erkannt haben.

Die Windenergieanlagen tauschen sich hierzu via SCADA untereinander aus. Jeder Status eines Eisansatzes wird hierbei von SCADA zum Zeitpunkt der Entstehung des Status einmalig zusammen mit der Anzahl der Anlagen im Park und der Nummer der Anlage, die den Status generiert hat, an alle Anlagen im Park übertragen. Jede Anlage speichert in einer Tabelle diese Information von allen anderen Anlagen im Park ab und berechnet bei jeder Änderung der Anlagen im Park und der Anzahl der Anlagen, die einen Eisansatz erkannt haben, einen so genannten Parkvereisungsgrad in Prozent.

Ist dieser Parkvereisungsgrad, der auch das Parkstörungssignal bilden kann, größer als ein vorbestimmter Wert, insbesondere größer als ein in der Steuersoftware angebbarer Wert, wird die Windenergieanlage, die vereinfachend auch als Anlage bezeichnet wird, mit einem Eisansatzerkennungsstatus gestoppt. Dieser Status, da er nicht bei der betreffenden Anlage generiert wurde, wird jedoch nicht an alle Anlagen verteilt und beeinflusst somit auch nicht den ermittelten Parkvereisungsgrad.

Vorzugsweise schicken die Anlagen, die einen Eiserkennungsstatus generiert haben, eine entsprechende Mitteilung an alle anderen Anlagen, sobald die Eisansatzerkennung zurückgesetzt wurde. Eine solche Statusmeldung wird mittels SCADA an alle Anlagen im Windpark übertragen. Jede Anlage löscht daraufhin die Eisansatzerkennung der Anlage, die die Information generiert hat, dass kein Ansatz mehr vorliegt, aus ihrer Tabelle und berechnet erneut den Parkvereisungsgrad. Ist dieser Parkvereisungsgrad dann geringer als der eingestellte Grenzwert, startet die Anlage wieder.

Wird beispielsweise ein Grenzwert von 20% eingestellt, bedeutet das z.B. in einem Park mit zehn Anlagen, dass diese Anlage gestoppt wird, wenn zwei oder mehr Anlagen einen Eiserkennungsstatus generieren. Um die Parkeiserkennung zu deaktivieren, muss für diesen Grenzwert ein Wert von 100% eingestellt werden.

Vorzugsweise können solche Werte auch manuell gelöscht bzw. auf 0 zurückgesetzt werden.

Eine Zurücksetzung einer solchen Parkeiserkennung sollte vorzugsweise nur im Ausnahmefall durchgeführt werden. Um Anlagen, die durch eine solche Parkeiserkennung gestoppt wurden, wieder in Betrieb zu nehmen, sollte statt einer Zurücksetzung der Parkeiserkennung insgesamt die Eiserkennung an solchen Anlagen zurückgesetzt werden, die wegen Eisansatz gestoppt wurden. Hierdurch kann der Parkvereisungsgrad unter den Grenzwert sinken, so dass die abhängig von diesem Grenzwert gestoppten Windenergieanlagen wieder anlaufen können.

Ebenso kann eine einzelne Anlage, die wegen einer Parkeiserkennung gestoppt wurde, wieder in Betrieb gesetzt werden - sei es auch nur kurzzeitig zu Wartungszwecken - indem der Grenzwert auf 100% gesetzt wird, wodurch die Parkeiserkennung für diese Anlage faktisch deaktiviert wird.

Nachfolgend wird die Erfindung beispielhaft anhand konkreter Ausführungsformen unter Bezugnahme auf die begleitenden Figuren näher erläutert.
- Fig. 1: zeigt eine Windenergieanlage, die ein erfindungsgemäßes Verfahren verwendet.
- Fig. 2: zeigt schematisch drei über ein SCADA-System miteinander verbundene Windenergieanlagen zum Austausch und gemeinsamer Auswertung von Fehlersignalen.
- Fig. 3: zeigt ein Ablaufdiagramm einer Ausführungsform zum Steuern einer Windenergieanlage.

Fig. 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

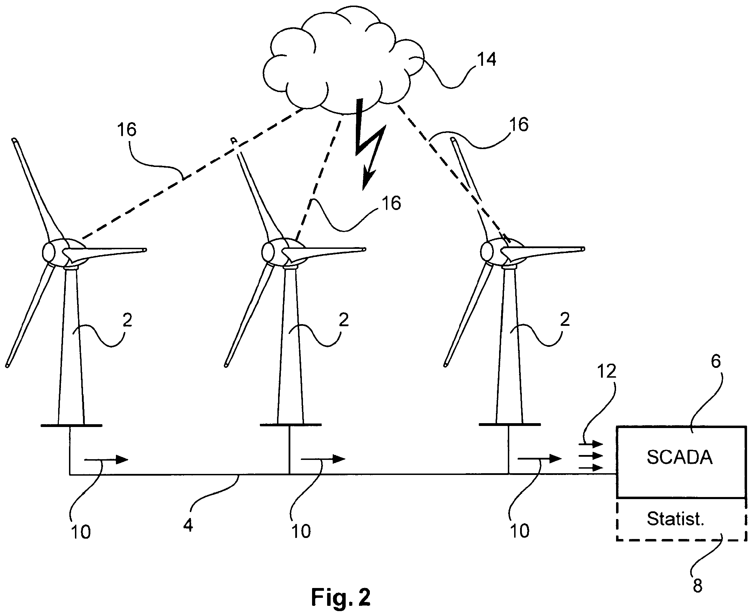

Fig. 2 zeigt schematisch drei Windenergieanlagen 2, die über ein Datenleitsystem 4 verbunden sind, das hier leitungsgebunden ausgeführt ist, aber auch als Funkverbindung vorgesehen sein kann. Dieses Datenleitsystem stellt zudem eine Verbindung zu einem sogenannten SCADA-System 6 her. Das SCADA-System 6 umfasst einen hier veranschaulichten Statistikblock 8. Informationen wie ein Fehlersignal zum Anzeigen einer Störung werden jeweils von den Windenergieanlagen 2 zu dem SCADA-System 6 geleitet. Dies wird durch den Informationspfeil 10 jeweils schematisch angedeutet. Die Sammelpfeile 12 veranschaulichen, dass die Informationen in dem SCADA-System 6 zusammenlaufen. Aus den Informationen kann mittels des Statistikblocks 8 eine statistische Auswertung vorgenommen werden. Hierzu gehört, Fehlersignale mehrerer Windenergieanlagen gemeinsam auszuwerten, um festzustellen, ob diese Fehlersignale tatsächlich eine Störung anzeigen, oder ob es sich um einen Fehlalarm handeln kann. Hierbei wird beispielsweise von der links dargestellten Windenergieanlage 2 ein Fehlersignal als für diese Windenergieanlage internes Fehlersignal zusammen mit Fehlersignalen der beiden anderen Windenergieanlagen 2 als externe Fehlersignale ausgewertet. Die Darstellung der Fig. 2 ist so gehalten, dass die drei dargestellten Windenergieanlagen 2 funktional gleichberechtigt dargestellt sind. Demnach kann je nach Situation, nämlich je nachdem, wo zuerst ein Fehlersignal auftritt, jede der Windenergieanlagen 2 die im Sinne obiger Erläuterungen erste Windenergieanlage sein, die ein internes Fehlersignal bereitstellt.

Die verbleibenden übrigen beiden Windenergieanlagen können in dem gezeigten Beispiel jeweils die anderen Windenergieanlagen sein, die jeweils ein externes Fehlersignal liefern.

Die Auswertung ist in Fig. 2 so dargestellt, dass sie in dem SCADA-System 6 durchgeführt wird. Ebenso kann die Auswertung jeweils in der Windenergieanlage durchgeführt werden. Jedenfalls wird ein SCADA-System zumindest zur Informationsweiterleitung, vorzugsweise auch zur Informationsauswertung, verwendet.

Fig. 2 veranschaulicht zudem eine Gewitterwolke 14. Wenn diese Gewitterwolke 14 zu einem Blitz mit begleitendem Donner führt, kann dieser Donner ein so lautes Geräusch erzeugen, das in allen dargestellten Windenergieanlagen 2 einen Geräuschsensor auslöst, der in jedem Fall, also in jeder der Windenergieanlagen 2, ein entsprechendes Fehlersignal erzeugt. Die gestrichelten Wirklinien 16 sollen veranschaulichen, dass sich der Donner auf jede der Windenergieanlagen 2 auswirkt. In diesem gezeigten Beispiel erzeugt dann jede der Windenergieanlagen 2 ein entsprechendes Fehlersignal, so dass insgesamt drei Fehlersignale erzeugt und im SCADA-System 6 gemeinsam ausgewertet werden. In diesem veranschaulichten Beispiel ergibt sich bei einer Auswirkung dann, dass zeitgleich drei Windenergieanlagen 2 jeweils ein durch ein lautes Geräusch verursachtes Fehlersignal erzeugt haben. Hieraus wird in diesen Beispielen geschlossen, dass dies kein Anlagendefekt wie ein loses Teil sein kann, das ein Poltern auslöst, sondern mit einem für alle drei Windenergieanlagen 2 gleichzeitig wirksames Phänomen zusammenhängen muss. Durch eine zusätzliche Auswertung eines Wetterberichts, sei es automatisiert oder manuell durch eine Person, kann der Verdacht erhärtet werden, dass keine Störung vorliegt und vielmehr ein aufziehendes Gewitter der Grund für das Auslösen der Geräuschsensoren sein muss.

Es liegt die Erkenntnis zugrunde, dass es unwahrscheinlich ist, dass alle drei Windenergieanlagen 2 zugleich einen technischen Schaden haben, der die Geräuschsensoren auslösen lässt. Selbst wenn bei einer dieser drei Windenergieanlagen 2 der Geräuschsensor zuerst anschlägt, weil der Donner beispielsweise näher an dieser Anlage dran ist, wird möglicherweise diese sicherheitshalber abgeschaltet, aber nach Empfang weiterer Fehlersignale ergibt sich aus Wahrscheinlichkeitsüberlegungen, dass nicht überall ein solcher Fehler vorliegen kann, und entsprechend werden nicht alle Windenergieanlagen abgeschaltet und müssen entsprechend auch nicht manuell wieder gestartet werden. Hierdurch kann ihre Verfügbarkeit erhöht werden. Im Anschluss an diese Situation kann gegebenenfalls auch die zunächst abgeschaltete Energieanlage wieder gestartet werden. Dies kann je nach Ausführungsform manuell oder automatisiert erfolgen.

Dieser Donner mit etwaigen Geräusch-motivierenden Fehlersignalen ist nur ein Beispiel. Andere Phänomene und andere Fehlersignale können entsprechend behandelt werden.

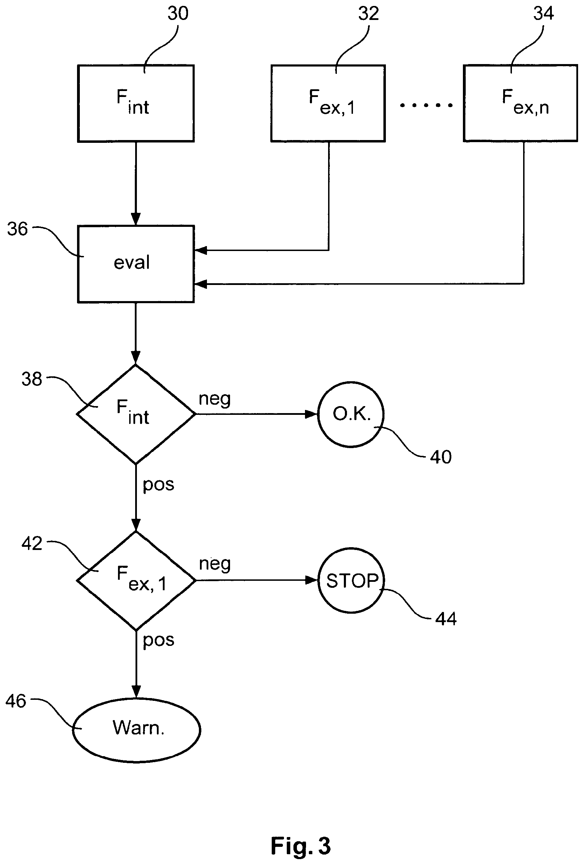

Fig. 3 veranschaulicht vereinfacht einen Ablaufplan einer vorgeschlagenen Bewertung gemäß einer Ausführungsform. Demnach wird im Block 30 ein internes Fehlersignal (Fᵢₙₜ) einer ersten Windenergieanlage aufgenommen. Die Blöcke 32 und 34 veranschaulichen, dass im Grunde beliebig viele weitere externe Fehlersignale (F_{ex,1} bis F_{ex,n}) aufgenommen werden können. Im Grunde hängt dies von der Anzahl hierzu verfügbarer Windenergieanlagen ab. Das Beispiel der Fig. 3 betrifft somit n+1 Windenergieanlagen, nämlich die erste und n weitere.

Die Fehlersignale, nämlich sowohl das interne Fehlersignal als auch die externen, werden in dem Evaluierungsblock 36 zusammengeführt. Es ist zu beachten, dass in dem gezeigten Beispiel von einem Fehlersignal ausgegangen wird, das immer vorliegt, aber aufgrund seines Wertes erst anzeigt, ob eine Störung vorliegt oder nicht. Beispielsweise können die Fehlersignale insoweit jeweils den Wert Null für keine Störung und 1 für Annahme einer Störung annehmen. Alternativ erfolgt überhaupt erst eine Übertragung eines Fehlersignals, wenn ein Fehlerfall vorliegt.

Die so zusammengeführten Informationen werden dann zunächst in dem Abfrageblock 38 für das interne Fehlersignal Fᵢₙₜ ausgewertet. Ist die Auswertung negativ, liegt also kein Fehlersignal für die erste Windenergieanlage vor, so ist alles o.K. und der Ablauf verzweigt zum ersten Ausgabeblock 40, der an dieser Stelle die Auswertung jedenfalls für die erste Windenergieanlage abbricht und gegebenenfalls ein o.K.-Signal ausgibt. Auf die Ausgabe des Signals kommt es aber nicht an, da vielmehr erst im Fehlerfalle ein Handlungsbedarf entsteht.

Ist das Ergebnis des ersten Abfrageblocks 38 positiv, liegt also ein Fehlersignal für die erste Windenergieanlage vor, so erfolgt eine weitere Abfrage im zweiten Abfrageblock 42. Hier wird überprüft, ob wenigstens eines der externen Fehlersignale F_{ex,i} bis F_{ex,n} ebenfalls einen gleichartigen Fehler bzw. eine gleichartige Störung anzeigen.

Ist dies nicht der Fall, so wird daraus geschlossen, dass tatsächlich eine Störung in der ersten Windenergieanlage vorliegt, und die Anlage wird somit gestoppt, was durch den Schutzblock 44 verdeutlicht wird. Die Anlage kann entsprechend angehalten werden, es kommen auch noch andere oder zusätzliche Maßnahmen in Betracht.

Ist hingegen im zweiten Abfrageblock 42 das Ergebnis positiv, gibt es also wenigstens ein externes Fehlersignal, das die gleiche Störung in einer anderen Windenergieanlage anzeigt wie das interne Fehlersignal der ersten Windenergieanlage, so wird keine Schutzmaßnahme ergriffen, zumindest nicht unmittelbar, sondern stattdessen eine Warnung gemäß dem Warnblock 46 ausgegeben. Diese Warnung kann im SCADA weiterverarbeitet werden, und es kann gegebenenfalls später entschieden werden, ob aufgrund weiterer Informationen endgültig von einer Fehlwarnung ausgegangen wird oder ob die erste Windenergieanlage doch angehalten werden muss oder andere Schutzmaßnahmen ergriffen werden müssen.

In dem Abfrageblock 42 kann auch eine Abfrage so vorgenommen werden, dass wenigstens zwei oder wenigstens drei oder wenigstens vier externe Fehlersignale, also entsprechend vieler anderer Windenergieanlagen die gleiche Störung wie das interne Fehlersignal anzeigen müssen, um schließlich zum Warnblock 46 und nicht zum Schutzblock 44 zu verzweigen.

Das in Fig. 3 gezeigte Schema kann grundsätzlich für jede Windenergieanlage der betrachteten Windenergieanlagenansammlung, insbesondere eines entsprechenden Windparks, sukzessive oder parallel durchgeführt werden.

Somit wird erfindungsgemäß auf einfache Weise, insbesondere ohne zusätzlichen Hardware-Aufwand, über eine statistische Auswertung die Aussagekraft etwaiger Fehlersignale verbessert. Etwaige ungewollte Anlagenstillstände können vermieden werden.

Somit können durch statistisch ermittelte Wahrscheinlichkeiten über mehrere Anlagen eines Windparks etwaige Fehlmessungen oder Fehlauswertungen korrigiert werden. Stillstandszeiten von Anlagen, ausgelöst durch einen Fehlalarm aus einer solchen Fehlmessung können vermieden werden.

Das zentrale SCADA-System erfasst hierfür alle Zustände aller Anlagen eines Windparks. Diese benötigten Daten können auch Statusdaten genannt werden. Ausgewählte Zustände werden statistisch erfasst, nämlich insbesondere als Anzahl der Anlagen mit dem gleichen Zustand zum selben Zeitpunkt, und als Statistik an die Anlagen zurückgesendet. Die autarken Anlagensteuerungen können somit unter Einbeziehung der Statistik Fehlalarme vermeiden. Das SCADA-System schafft somit eine Datenzusammenstellung und Datenbankeinstellung, wobei aber der Windenergieanlage jeweils selbst überlassen ist, welche Konsequenz sie hieraus ziehen muss. In den Anlagen vorhandene autarke Anlagensteuerungen können gemäß einer Ausführung somit unter Einbeziehung der Statistik Fehlalarme vermeiden oder die Zustände anderer Anlagen benutzen und entsprechend darauf reagieren.

Es wird eine kostengünstige Lösung geschaffen, da nur ein einmaliger Softwareaufwand erforderlich ist.

Auf die folgenden konkreten Beispiele wird zur Erläuterung noch einmal hingewiesen:
Bei schweren Gewittern und Hagelschauern mit extrem großen Hagelkörnern kommt es beim Stand der Technik zur Fehlauslösung der Geräuschsensoren. Um hier Abhilfe zu schaffen, wird ein Informationsaustausch der Anlagen im Park mit Hilfe von SCADA vorgeschlagen.

Sobald eine Anlage eine entsprechende Information wie beispielsweise "Geräusch im Spinner erkannt" an SCADA überträgt, die üblicherweise einem entsprechenden Status ("Geräusch imSpinner") 50:14 vorausgeht, wird diese Information von SCADA unmittelbar an alle Anlagen im Park zurückgeschickt. Somit hat jede Anlage die Möglichkeit zu erkennen, ob innerhalb eines bestimmten Zeitraums noch Geräuschsensoren anderer Anlagen im Park angesprochen haben.

Wenn beispielsweise innerhalb von 30 Minuten zwei Anlagen in einem Park mit zwei oder drei Anlagen bzw. drei oder mehr Anlagen in größeren Parks Geräusche erkennen, werden die Geräuschsensoren aller Anlagen im Park für mindestens 30 Minuten deaktiviert. Alle Anlagen generieren Statusinformation "Geräuschsensor deaktiviert". 30 Minuten nachdem das letzte Geräusch von einer Anlage erkannt wurde oder nach maximal 5 Stunden werden die Geräuschsensoren wieder aktiviert. Hier können statt der genannten 30 Minuten als auch statt der genannten 5 Stunden grundsätzlich auch andere Zeitwerte verwendet werden. Alle Anlagen übertragen dann die Information "Geräuschsensor aktiviert" an SCADA. Durch diese Informationen kann bei Bedarf festgestellt werden, wann und wie lange Geräuschsensoren deaktiviert waren.

Sollte eine Anlage aufgrund eines Gewitters oder eines Hagelschauers bereits mit oben genanntem Status 50:14 abgeschaltet haben, bevor eine ausreichende Anzahl anderer Anlagen ebenfalls Geräusche im Spinner erkannt haben, dann wird bei dieser Anlage die sogenannte Reset-Sperre wieder aufgehoben und die Störung quittiert. Die Anlage geht jetzt automatisch mit deaktiviertem Geräuschsensor wieder in Betrieb. Voraussetzung hierfür ist allerdings, dass der genannte Status 50:14 noch nicht länger als 30 Minuten ansteht. Dann muss nämlich davon ausgegangen werden, dass es eine andere Ursache für den Status gibt.

Die Reset-Sperre verhindert, dass die Anlage durch den Betreiber wieder in Betrieb genommen werden kann. Die Reset-Sperre kann nach Eingabe eines Service-Codes durch einen Service-Mitarbeiter aufgehoben werden.

Durch Gewitter verursachte Fehlauslösungen dürften durch diese Maßnahmen in Zukunft weitestgehend ausgeschlossen werden können. Für Einzelanlagen ist diese vorgeschlagene Änderung im Steuerungssystem grundsätzlich wirkungslos, so dass eine Softwareumstellung grundsätzlich allgemein vorgeschlagen werden kann, ohne dass Rücksicht darauf genommen werden muss, ob die Anlage als einzige Anlage oder in einem Park aufgestellt werden soll. Demnach kann es allenfalls dazu führen, dass vereinzelte Fehlauslösungen an Einzelanlagen bei Gewitter gegebenenfalls in Kauf genommen werden müssten.

Als weiteres Beispiel wird auf bisher vorhandene Probleme mit Rauchmeldern erläuternd hingewiesen. Durch feinste Eiskristalle und Wüstenstaub ist es im Stand der Technik an einigen Standorten wiederholt zu Fehlauslösungen von Rauchmeldern in der Gondel gekommen. Auch hierfür wird vorgeschlagen, im Grunde nach wie vor bei den oben beschriebenen Geräuschsensoren, einen Informationsaustausch der Anlagen in einem Park mit Hilfe von SCADA stattfinden zu lassen.

Sobald hier eine Anlage den Status "Rauchmelder (Luke)" bzw. "Rauchmelder (Spinner)" an SCADA überträgt, wird diese Information von SCADA unmittelbar an alle Anlagen im Park zurückgeschickt bzw. verteilt. Somit hat jede Anlage die Möglichkeit zu erkennen, ob innerhalb eines bestimmten Zeitraums noch Rauchmelder anderer Anlagen im Park angesprochen haben.

Wenn innerhalb von 5 Stunden an zwei Anlagen in einem Park mit zwei oder drei Anlagen bzw. an drei oder mehr Anlagen in größeren Parks Rauchmelder ansprechen, werden die beiden Rauchmelder an der Luke und dem Spinner in allen Anlagen im Park für 24 Stunden deaktiviert. Alle Anlagen generieren dann die Information "Rauchmelder: Luke und Spinner deaktiviert". Nach Ablauf der 24 Stunden werden die Rauchmelder mit der Information "Rauchmelder: Luke und Spinner aktiviert" wieder für mindestens 6 Stunden aktiviert. Auch diese Zeiten können variieren. Dadurch wird verhindert, dass mehrere beispielsweise defekte Rauchmelder in einem Park die Rauchmelder aller Anlagen dauerhaft deaktivieren.

Da die Deaktivierung der Rauchmelder vorzugsweise erst erfolgt, wenn bereits zwei bzw. drei Anlagen mit dem Status "automatische Deaktivierung der Rauchmelder" abgeschaltet haben, wird bei dieser Anlage die Reset-Sperre wieder aufgehoben und die Störung quittiert. Die Anlage geht jetzt automatisch mit deaktivierten Rauchmeldern wieder in Betrieb. Voraussetzung hierfür ist allerdings, dass der Status "automatische Deaktivierung der Rauchmelder" noch nicht länger als 5 Stunden ansteht. Dann muss nämlich davon ausgegangen werden, dass es eine andere Ursache für den Status gibt.

## Patentansprüche

1. Verfahren zum Steuern einer ersten Windenergieanlage (2,100), umfassend
- Erfassen eines internen in der ersten Windenergieanlage erzeugten, eine Störung der ersten Windenergieanlage anzeigenden Fehlersignals (F_{INT}),
- Empfangen wenigstens eines externen, außerhalb der ersten Windenergieanlage erzeugten eine Störung einer anderen Windenergieanlage anzeigenden Fehlersignals (F_{EX}),
- Auswerten des internen Fehlersignal (F_{INT})in Abhängigkeit des wenigstens einen externen Fehlersignals (F_{EX}), wobei
beim Auswerten des internen Fehlersignals (F_{INT}) von dem Nichtvorliegen einer Störung ausgegangen wird, wenn das interne Fehlersignal (F_{INT}) eine Störung anzeigt und das wenigstens eine externe bzw. wenigstens eines der externen Fehlersignale (F_{Ex}) jeweils eine gleichartige Störung der betreffenden externen Windenergieanlage anzeigt.

2. Verfahren nach Anspruch 1, **dadurch gekennzeichnet, dass** wenigstens eine Schutzmaßnahme zum Schützen der ersten Windenergieanlage (2,100), insbesondere Anhalten der Windenergieanlage (2,100), abhängig von dem internen Fehlersignal (F_{INT}) und abhängig von dem wenigstens einen externen Fehlersignal (F_{Ex}) eingeleitet wird.

3. Verfahren nach einem der vorstehenden Ansprüche, **dadurch gekennzeichnet, dass**, wenn das interne Fehlersignal (F_{INT}) eine Störung der ersten Windenergieanlage (2,100) anzeigt,
- eine Schutzmaßnahme, insbesondere Anhalten der Windenergieanlage (2,100), eingeleitet wird, wenn das empfangene externe Fehlersignal (F_{EX}) bzw. eines der empfangenen externen Fehlersignale (F_{EX}) nicht auf eine gleichartige Störung der betreffenden anderen Windenergieanalage hinweist,
- eine Warnung, insbesondere ein Warnsignal erzeugt wird, wenn das empfangene externe Fehlersignal (F_{EX}) bzw. eines der empfangenen externen Fehlersignale (F_{EX}) eine gleichartige Störung der betreffenden anderen Windenergieanlage anzeigt, wobei dann insbesondere keine Schutzmaßnahme eingeleitet wird.

4. Verfahren nach einem der vorstehenden Ansprüche, **dadurch gekennzeichnet, dass** ein bzw. das Warnsignal, das erzeugt wird, wenn das interne Fehlersignal (F_{INT}) eine Störung anzeigt und das wenigstens eine externe bzw. wenigstens eines der externen Fehlersignale (F_{Ex}) jeweils eine gleichartige Störung der betreffenden externen Windenergieanlage anzeigt, an eine Leitzentrale übersandt wird und Informationen des internen und des wenigstens einen externen Fehlersignals (F_{EX}) umfasst.

5. Verfahren nach einem der vorstehenden Ansprüche, **dadurch gekennzeichnet, dass** das bzw. ein Warnsignal und/oder eine Übertragung oder Bereitstellung des wenigstens einen externen Fehlersignals (F_{Ex}) mittels SCADA erfolgt.

6. Verfahren nach einem der vorstehenden Ansprüche, **dadurch gekennzeichnet, dass** das interne Fehlersignal (F_{INT}) und/oder ein betreffendes Sensorsignal für eine vorbestimmte Zeit unterdrückt wird, wenn das interne Fehlersignal (F_{INT}) eine Störung anzeigt und das wenigstens eine externe bzw. wenigstens eines der externen Fehlersignale (F_{EX}) jeweils eine gleichartige Störung der betreffenden Windenergieanlage anzeigt.

7. Verfahren zum Steuern einer ersten Windenergieanlage (2,100), umfassend
- Erfassen eines internen in der ersten Windenergieanlage erzeugten, eine Störung der ersten Windenergieanlage anzeigenden Fehlersignals (F_{INT}),
- Empfangen wenigstens eines externen, außerhalb der ersten Windenergieanlage erzeugten eine Störung einer anderen Windenergieanlage anzeigenden Fehlersignals (F_{EX}),
- Auswerten des internen Fehlersignal (F_{INT})in Abhängigkeit des wenigstens einen externen Fehlersignals (F_{EX}),wobei
beim Auswerten des internen Fehlersignals (F_{INT}) von dem Vorliegen einer Störung ausgegangen wird, wenn das interne Fehlersignal (F_{INT}) eine Störung anzeigt und das wenigstens eine externe bzw. eines der externen Fehlersignale (F_{EX}) jeweils eine gleichartige Störung der betreffenden externen Windenergieanlage anzeigt, insbesondere einen Eisansatz, wobei dann ein Parkstörungssignal generiert wird, das weiteren Windenergieanlagen anzeigt, dass eine Störung vorliegt, die weitere Windenergieanlagen betrifft oder bei der wahrscheinlich ist, dass sie weitere Windenergieanlagen betrifft, die bisher selbst kein entsprechendes Fehlersignal erzeugt haben.

8. Verfahren zum Steuern mehrerer Windenergieanlagen (2,100), wobei wenigstens eine der Windenergieanlagen (2,100) mit einem Verfahren nach einem der vorstehenden Ansprüche gesteuert wird und ihr wenigstens ein internes Fehlersignal (F_{INT}) wenigsten einer weiteren der Windenergieanlagen (2,100) als externes Fehlersignal (F_{EX}) zur Verfügung gestellt wird, insbesondere, dass die Windenergieanlagen (2,100) ihre Fehlersignale untereinander austauschen.

9. Verfahren nach Anspruch 8, **dadurch gekennzeichnet, dass** beim Vorliegen eines Fehlersignals zu einem Fehlerzustand, insbesondere einer Eisansatzerkennung, an wenigstens zwei Windenergieanlagen eine weitere, insbesondere benachbarte Windenergieanlage, die ein solches Fehlersignal nicht erzeugt hat, in den gleichen Fehlerzustand versetzt wird wie die Windenergieanlagen, die den Fehler detektiert haben, und/oder ein Parkstörungssignal erzeugt und an wenigstens eine bzw. die Windenergieanlage übertragen wird, die kein Fehlersignal des genannten Fehlers erzeugt hat.

10. Windenergieanalage (2,100) mit einem aerodynamischen Rotor (106) zum Erzeugen einer Drehbewegung aus Wind, mit einem elektrischen Generator zum Erzeugen elektrischer Leistung aus der Drehbewegung, wobei die Windenergieanlage (2,100) zum Steuern mittels eines Verfahrens nach einem der Ansprüche 1 bis 7 vorbereitet ist, insbesondere, dass die Windenergieanlage (2,100) eine Steuerungsvorrichtung aufweist, auf der ein Verfahren nach einem der Ansprüche 1 bis 7 implementiert ist.

11. Windpark mit mehreren Windenergieanlagen (2,100) und wenigstens einer Windenergieanlage (2,100) nach Anspruch 10, wobei der Windpark dazu vorbereitet ist, ein Verfahren nach Anspruch 8 oder 9 auszuführen.

## Claims

1. A method of controlling a first wind power installation (2, 100) including
- detecting an internal fault signal (F_{INT}) which is produced in the first wind power installation and which indicates a disturbance in the first wind power installation,
- receiving at least one external fault signal (F_{EX}) which is produced outside the first wind power installation and which indicates a disturbance in another wind power installation, and
- evaluating the internal fault signal (F_{INT}) in dependence on the at least one external fault signal (F_{EX}), wherein
upon evaluation of the internal fault signal (F_{INT}) it is assumed that a disturbance is not present if the internal fault signal (F_{INT}) indicates a disturbance and the at least one external or at least one of the external fault signals (F_{EX}) respectively indicates a similar disturbance in the respective external wind power installation.

2. A method according to claim 1 **characterised in that** at least one protective measure for protecting the first wind power installation (2, 100), in particular stoppage of the wind power installation (2, 100), is initiated in dependence on the internal fault signal (F_{INT}) and in dependence on the at least one external fault signal (F_{EX}).

3. A method according to one of the preceding claims **characterised in that** if the internal fault signal (F_{INT}) indicates a disturbance in the first wind power installation (2, 100),
- a protective measure, in particular stoppage of the wind power installation (2, 100) is initiated if the received external fault signal (F_{EX}) or one of the received external fault signals (F_{EX}) does not indicate a similar disturbance in the respective other wind power installation, and
- a warning and in particular a warning signal is produced if the received external fault signal (F_{EX}) or one of the received external fault signals (F_{EX}) indicates a similar disturbance in the respective other wind power installation, wherein **in that** case in particular no protective measure is initiated.

4. A method according to one of the preceding claims **characterised in that** a or the warning signal which is produced when the internal fault signal (F_{INT}) indicates a disturbance and the at least one external or at least one of the external fault signals (F_{EX}) respectively indicates a similar disturbance in the respective external wind power installation is passed to a control centre and includes information of the internal and the at least one external fault signal (F_{EX}).

5. A method according to one of the preceding claims **characterised in that** the or a warning signal and/or transmission or implementation of the at least one external fault signal (F_{EX}) is effected by means of SCADA.

6. A method according to one of the preceding claims **characterised in that** the internal fault signal (F_{INT}) and/or a respective sensor signal is suppressed for a predetermined time if the internal fault signal (F_{INT}) indicates a disturbance and the at least one external or at least one of the external fault signals (F_{EX}) respectively indicates a similar disturbance in the respective wind power installation in question.

7. A method of controlling a first wind power installation (2, 100) including
- detecting an internal fault signal (F_{INT}) which is produced in the first wind power installation and which indicates a disturbance in the first wind power installation,
- receiving at least one external fault signal (F_{EX}) which is produced outside the first wind power installation and which indicates a disturbance in another wind power installation, and
- evaluating the internal fault signal (F_{INT}) in dependence on the at least one external fault signal (F_{EX}), wherein
upon evaluation of the internal fault signal (F_{INT}) it is assumed that a disturbance is present if the internal fault signal (F_{INT}) indicates a disturbance and the at least one external or at least one of the external fault signals (F_{EX}) respectively indicates a similar disturbance in the respective external wind power installation, in particular an ice accretion, wherein a park disturbance signal is generated which indicates to further wind power installations that there is a disturbance which involves further wind power installations or in respect of which it is probable that it involves further wind power installations which hitherto themselves have not produced a corresponding fault signal.

8. A method of controlling a plurality of wind power installations (2, 100), wherein at least one of the wind power installations (2, 100) is controlled with a method according to one of preceding claims and there is made available thereto at least one internal fault signal (F_{INT}) of at least one further one of the wind power installations (2, 100) as an external fault signal (F_{EX}) and in particular the wind power installations (2, 100) exchange their fault signals with each other.

9. A method according to claim 8 **characterised in that** in the presence of a fault signal relating to a fault condition, in particular ice accretion detection, at at least two wind power installations, a further and in particular adjacent wind power installation which has not produced such a fault signal is put into the same fault condition as the wind power installations which have detected the fault, and/or a park disturbance signal is produced and is transmitted to at least one or the wind power installation which has not produced a fault signal in respect of the stated fault.

10. A wind power installation (2, 100) comprising an aerodynamic rotor (106) for producing a rotary movement from wind, an electric generator for generating electric power from the rotary movement, wherein the wind power installation (2, 100) is adapted for control by means of a method according to one of claims 1 to 7, in particular the wind power installation (2, 100) has a control device on which a method according to one of claims 1 to 7 is implemented.

11. A wind park comprising a plurality of wind power installations (2, 100) and at least one wind power installation (2, 100) according to claim 10 , wherein the wind park is adapted to carry out a method according to claim 8 or claim 9.

## Revendications

1. Procédé servant à commander une première éolienne (2, 100), comprenant
- la détection d'un signal de dysfonctionnement interne (F_{INT}) généré dans la première éolienne, indiquant une défaillance de la première éolienne,
- la réception d'au moins un signal de dysfonctionnement externe (F_{Ex}) généré à l'extérieur de l'éolienne, indiquant une défaillance d'une autre éolienne,
- l'évaluation du signal de dysfonctionnement interne (F_{INT}) en fonction de l'au moins un signal de dysfonctionnement externe (F_{EX}), dans lequel
on suppose, lors de l'évaluation du signal de dysfonctionnement interne (F_{INT}), l'absence d'une défaillance quand le signal de dysfonctionnement interne (F_{INT}) indique une défaillance et l'au moins un signal de dysfonctionnement externe ou au moins un des signaux de dysfonctionnement externes (F_{Ex}) indique respectivement une défaillance de même type de l'éolienne externe concernée.

2. Procédé selon la revendication 1, **caractérisé en ce qu'**au moins une mesure de protection est initiée pour protéger la première éolienne (2, 100), en particulier l'arrêt de l'éolienne (2, 100), en fonction du signal de dysfonctionnement interne (F_{INT}) et en fonction de l'au moins un signal de dysfonctionnement externe (F_{EX}) .

3. Procédé selon l'une quelconque des revendications précédentes, **caractérisé en ce que**, quand le signal de dysfonctionnement interne (F_{INT}) indique une défaillance de la première éolienne (2, 100),
- une mesure de protection, en particulier l'arrêt de l'éolienne (2, 100), est initiée quand le signal de dysfonctionnement externe (F_{Ex}) reçu ou un des signaux de dysfonctionnement externes reçus (F_{Ex}) ne souligne pas une défaillance de même type que l'autre éolienne concernée,
- un avertissement, en particulier un signal d'avertissement, est généré quand le signal de dysfonctionnement (F_{EX}) reçu ou un des signaux de dysfonctionnement externe (F_{EX}) reçus indique une défaillance du même type de l'autre éolienne concernée, dans lequel alors en particulier aucune mesure de protection n'est initiée.

4. Procédé selon l'une quelconque des revendications précédentes, **caractérisé en ce qu'**un ou le signal d'avertissement, qui est généré quand le signal de dysfonctionnement interne (F_{INT}) indique une défaillance et l'au moins un signal de dysfonctionnement externe ou au moins un des signaux de dysfonctionnement externes (F_{EX}) indique respectivement une défaillance du même type de l'éolienne externe concernée, est transféré à un poste de commande central et comprend des informations du signal de dysfonctionnement interne et de l'au moins un signal de dysfonctionnement externe (F_{EX}).

5. Procédé selon l'une quelconque des revendications précédentes, **caractérisé en ce que** le ou un signal d'avertissement et/ou une transmission ou une mise à disposition de l'au moins un signal de dysfonctionnement externe (F_{Ex}) sont effectués au moyen de SCADA.

6. Procédé selon l'une quelconque des revendications précédentes, **caractérisé en ce que** le signal de dysfonctionnement interne (F_{INT}) et/ou un signal de capteur concerné est supprimé pour une durée prédéfinie quand le signal de dysfonctionnement interne (F_{INT}) indique une défaillance et l'au moins un signal de dysfonctionnement externe ou au moins un des signaux de dysfonctionnement externe (F_{Ex}) indique respectivement une défaillance du même type de l'éolienne concernée.

7. Procédé servant à commander une première éolienne (2, 100), comprenant
- la détection d'un signal de dysfonctionnement interne (F_{INT}) généré dans la première éolienne, indiquant une défaillance de la première éolienne,
- la réception d'au moins un signal de dysfonctionnement externe (F_{Ex}) généré à l'extérieur de la première éolienne, indiquant une défaillance d'une autre éolienne,
- l'évaluation du signal de dysfonctionnement interne (F_{INT}) en fonction de l'au moins un signal de dysfonctionnement externe (F_{EX}), dans lequel
on suppose, lors de l'évaluation du signal de dysfonctionnement interne (F_{INT}), la présence d'une défaillance quand le signal de dysfonctionnement interne (F_{INT}) indique une défaillance et l'au moins un signal de dysfonctionnement externe ou un des signaux de dysfonctionnement externe (F_{Ex}) indique respectivement une défaillance du même type de l'éolienne externe concernée, en particulier une formation de givre, dans lequel alors un signal de défaillance de stationnement est généré, qui indique à d'autres éoliennes qu'une défaillance est présente, qui concerne d'autres éoliennes ou dans laquelle il est probable qu'elle concerne d'autres éoliennes, qui n'ont jusqu'à présent généré elles-mêmes aucun signal de dysfonctionnement correspondant.

8. Procédé servant à commander plusieurs éoliennes (2, 100), dans lequel au moins une des éoliennes (2, 100) est commandée avec un procédé selon l'une quelconque des revendications précédentes et un signal de dysfonctionnement interne (F_{INT}) est fourni au moins à une autre des éoliennes (2, 100) en tant que signal de dysfonctionnement externe (F_{EX}), en particulier que les éoliennes (2, 100) échangent entre elles leurs signaux de dysfonctionnement.

9. Procédé selon la revendication 8, **caractérisé en ce que**, dans le cas de la présence d'un signal de dysfonctionnement concernant un état de dysfonctionnement, en particulier une identification de formation de givre, à l'attention d'au moins deux éoliennes, une autre éolienne, en particulier adjacente, qui n'a pas généré un tel signal de dysfonctionnement, est amenée dans le même état de dysfonctionnement que les éoliennes qui ont détecté le dysfonctionnement, et/ou un signal de défaillance de stationnement est généré et est transmis à au moins une ou à l'éolienne qui n'a généré aucun signal de dysfonctionnement du dysfonctionnement mentionné.

10. Eolienne (2, 100) avec un rotor (106) aérodynamique servant à générer un mouvement de rotation à partir du vent, avec un générateur électrique servant à générer une puissance électrique à partir du mouvement de rotation, dans laquelle l'éolienne (2, 100) est préparée pour une commande au moyen d'un procédé selon l'une quelconque des revendications 1 à 7, en particulier que l'éolienne (2, 100) présente un dispositif de commande, sur lequel un procédé selon l'une quelconque des revendications 1 à 7 est implémenté.

11. Parc éolien avec plusieurs éoliennes (2, 100) et au moins une éolienne (2, 100) selon la revendication 10, dans lequel le parc éolien est préparé pour exécuter un procédé selon la revendication 8 ou 9.
